# EUROPEAN PATENT APPLICATION

(11) **EP 4 667 790 A1**
(43) Date of publication of application: **24.12.2025**
(21) Application number: 24756739.9
(22) Date of filing: 06.02.2024
(51) Int. Cl.: F16J 15/34

(54) **MECHANICAL SEAL**

(30) Priority: 13.02.2023 JP 2023019828
(71) Applicant: Eagle Industry Co., Ltd., Minato-ku Tokyo 105-8587 (JP)
(72) Inventor: IMURA Tadatsugu, Tokyo 105-8587 (JP)
(74) Representative: WSL Patentanwälte Partnerschaft mbB
(86) International application number: PCT/JP2024/003893
(87) International publication number: WO 2024/171890

(57) **Abstract**

Sliding components capable of reducing a leakage amount of a sealed fluid and separating sliding surfaces from each other in a well-balanced manner are provided. At least one sliding surface 11 of seal rings 10 and 20 is provided with a supply hole 10b which supplies a barrier fluid G between the sliding surfaces 11 and 21, the sliding surface 21 is provided with an introduction groove 23 which is formed to overlap with the supply hole 10b in an axial view and extend in a circumferential direction, branch grooves 24 and 25 each extends from the introduction groove 23 to each of the sealed fluid side and the leakage side, and the branch groove 25 extending toward a leakage side S2 has a smaller groove volume than the branch groove 24 extending toward a sealed fluid side S1.

## Description

### {TECHNICAL FIELD}

The present invention relates to a mechanical seal, for example, a mechanical seal including sliding components that rotate relative to each other and particularly used for a shaft sealing device sealing a rotating shaft of a rotating machine in an automotive seal field, a general industrial machinery seal field, or another seal field.

### {BACKGROUND ART}

As a shaft sealing device that prevents the leakage of a sealed fluid, for example, a mechanical seal includes a pair of annular sliding components that rotate relative to each other and have sliding surfaces sliding against each other. In such a mechanical seal, there has been a demand in recent years for the purpose of environmental protection and the like to reduce the energy lost due to sliding.

For example, in a mechanical seal shown in Patent Citation 1, a fluid supply passage is formed in a stationary seal ring for communication between a seal surface and an external fluid supply source. Further, a rotary seal ring is provided with a fluid guide groove into which a gas such as a nitrogen gas is introduced from the fluid supply passage and which extends in the circumferential direction, a plurality of dynamic pressure generation grooves which extend from the fluid guide groove toward a high pressure side, and a plurality of dynamic pressure generation grooves which extend from the fluid guide groove toward a low pressure side.

When a gas is supplied from the fluid supply source, the gas flows into the fluid guide groove and is evenly distributed at a static pressure in the circumferential direction and the radial direction between the relative sliding surfaces by the dynamic pressure generation grooves on the high pressure side and the low pressure side, and the sliding surfaces can be separated from each other by the static pressure. Further, since a dynamic pressure is generated in each dynamic pressure generation groove in addition to the static pressure during relative rotation, the sliding surfaces can be further separated from each other and the friction generated during relative rotation can be effectively reduced.

### {CITATION LIST}

### {Patent Literature}

Patent Citation 1: JP 2006-022834 A (Page 6, FIG. 3)

### {SUMMARY OF INVENTION}

### {Technical Problem}

In the mechanical seal of Patent Citation 1, although the dynamic pressure generation grooves on the high pressure side and the low pressure side generate the static pressure and the dynamic pressure substantially evenly in the circumferential direction and the radial direction between the relative sliding surfaces to separate the sliding surfaces from each other in a well-balanced manner, the gas is likely to leak from the dynamic pressure generation groove on the low pressure side toward the low pressure side. Therefore, there is concern that a sealed fluid on the high pressure side may leak into a low pressure side space together with the gas leaking between the sliding surfaces from the dynamic pressure generation groove on the low pressure side.

The present invention has been made in view of such problems and an object thereof is to provide sliding components capable of reducing a leakage amount of a sealed fluid and separating sliding surfaces from each other in a well-balanced manner.

### {Solution to Problem}

In order to solve the above-described problems, a mechanical seal according to the present invention is a mechanical seal disposed between a housing and a rotating shaft rotating relative to the housing, including a stationary seal ring fixed to a housing side and a rotary seal ring fixed to a rotating shaft side, and defining a sealed fluid space and a leakage space by relative rotation of the stationary seal ring and the rotary seal ring, wherein at least one sliding surface of the stationary seal ring and the rotary seal ring is provided with a supply hole which supplies a barrier fluid between the sliding surfaces and at least one sliding surface of the stationary seal ring and the rotary seal ring is provided with an introduction groove which is formed to overlap with the supply hole in an axial view and extend in a circumferential direction, wherein branch grooves each extends from the introduction groove to each of a sealed fluid side and a leakage side, and wherein the branch groove extending toward the leakage side has a smaller groove volume than the branch groove extending toward the sealed fluid side. According to the feature of the present invention, since a sufficient amount of barrier fluid is supplied to the branch groove extending toward the sealed fluid side, and a small amount of barrier fluid is supplied to the branch groove extending toward the leakage side, it is possible to reduce the leakage amount of the sealed fluid and to separate the sliding surfaces in a well-balanced manner.

It may be preferable that the branch groove extending toward the leakage side has an average depth shallower than that of the branch groove extending toward the sealed fluid side. According to this preferable configuration, since it is possible to ensure a wide opening area of the branch groove facing the mating seal ring, it is easy to separate the sliding surfaces from each other.

It may be preferable that a radial end of the branch groove extending toward the leakage side exists at a position farther from the introduction groove in a radial direction than a radial end of the branch groove extending toward the sealed fluid side. According to this preferable configuration, it is possible to generate a pressure in a wide range of the radial direction on the leakage side.

It may be preferable that the branch groove extending toward the leakage side and the branch groove extending toward the sealed fluid side communicate with the introduction groove. According to this preferable configuration, it is possible to separate the sliding surfaces from each other by reliably introducing the barrier fluid from the introduction groove into both branch grooves.

It may be preferable that the introduction groove has an endless annular shape. According to this preferable configuration, since a pressure is generated in a well-balanced manner in the circumferential direction, the sliding surfaces can be stably separated from each other. Further, a dynamic pressure is less likely to be generated locally in the circumferential direction of the introduction groove during rotation.

It may be preferable that the branch groove has a dynamic pressure generation portion which extends in a relative rotation direction of the stationary seal ring and the rotary seal ring. According to this preferable configuration, a lift force between the sliding surfaces is improved by the dynamic pressure generated during relative rotation in addition to the static pressure of the barrier fluid.

It may be preferable that an end of the dynamic pressure generation portion in the branch groove extending toward the leakage side extends toward the introduction groove side. According to this preferable configuration, it is possible to reduce the amount of the sealed fluid leaking into the leakage side space together with the barrier fluid leaking from the end of the dynamic pressure generation portion in the branch groove extending toward the leakage side.

It may be preferable that a radial width between the leakage side and an end of the dynamic pressure generation portion in the branch groove extending toward the leakage side is larger than a radial width between an end of the dynamic pressure generation portion and the introduction groove. According to this preferable configuration, it is possible to reduce the amount of the sealed fluid leaking into the leakage side space together with the barrier fluid leaking from the tip of the branch groove extending toward the leakage side.

### {BRIEF DESCRIPTION OF DRAWINGS}

FIG. 1 is a longitudinal sectional view showing an example of a mechanical seal according to a first embodiment of the present invention.
FIG. 2 is a view showing a sliding surface of a rotary seal ring in the first embodiment as viewed from an axial direction.
FIG. 3 is a partially enlarged view of FIG. 2.
FIG. 4 is a cross-sectional view taken along line A-A.
FIG. 5A is a cross-sectional view taken along line B-B and FIG. 5B is a cross-sectional view taken along line C-C.
FIG. 6A is a schematic view showing the state of static pressure acting on the sliding surface and FIG. 6B is a schematic view showing the state of dynamic pressure acting on the sliding surface.
FIG. 7 is a view showing an introduction groove and a branch groove of a mechanical seal according to a second embodiment of the present invention as viewed from an axial direction.
FIG. 8 is a view showing an introduction groove and a branch groove of a mechanical seal according to a third embodiment of the present invention as viewed from an axial direction.
FIG. 9 is a view showing an introduction groove and a branch groove of a mechanical seal according to a fourth embodiment of the present invention as viewed from an axial direction.
FIG. 10 is a view showing an introduction groove and a branch groove of a mechanical seal according to a fifth embodiment of the present invention as viewed from an axial direction.
FIG. 11 is a view showing an introduction groove and a branch groove of a mechanical seal according to a sixth embodiment of the present invention as viewed from an axial direction.
FIG. 12 is a view showing an introduction groove and a branch groove of a mechanical seal according to a seventh embodiment of the present invention as viewed from an axial direction.

### {DESCRIPTION OF EMBODIMENTS}

Modes for carrying out a mechanical seal according to the present invention will be described below based on embodiments.

### {First embodiment}

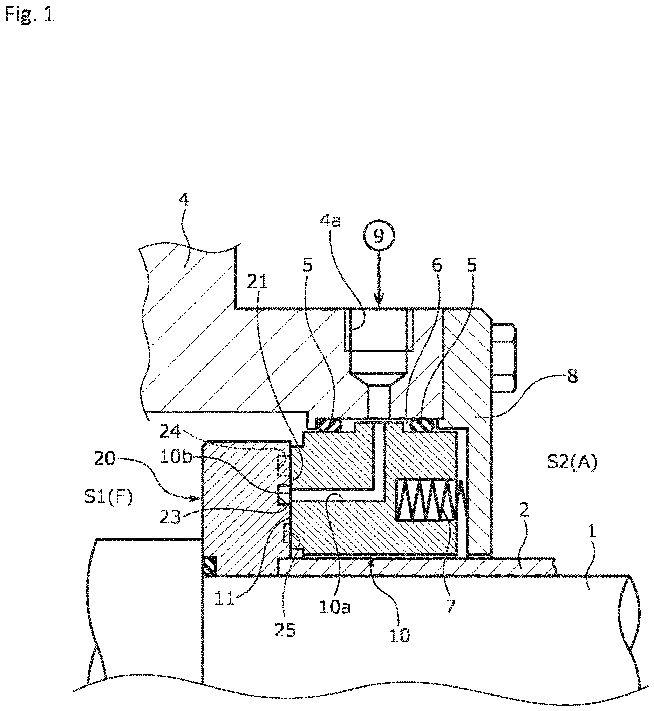

A mechanical seal according to a first embodiment will be described with reference to FIGS. 1 to 6.

A mechanical seal shown in FIG. 1 is of an inside type that seals a sealed fluid F that tends to leak from an outer radial side to an inner radial side of a sliding surface.

Specifically, the sealed fluid F exists in an outer space S1 of the mechanical seal, and an atmosphere A exists in an inner space S2. In this embodiment, the outer radial side of the sliding components constituting the mechanical seal will be described as a sealed fluid space side (high pressure side), and the inner radial side thereof will be described as a leakage space side (low pressure side). Further, for convenience of description, grooves and the like formed on the sliding surface may be indicated by dots in the drawings.

The mechanical seal mainly includes a stationary seal ring 10 which serves as the other annular seal ring and a rotary seal ring 20 which serves as one annular seal ring. The rotary seal ring 20 is provided on a rotating shaft 1 to be rotatable together with the rotating shaft 1 via a sleeve 2. The stationary seal ring 10 is provided on an inner radial side of a housing 4 of an attachment target device not to be rotatable, but movable in the axial direction.

Two O-rings 5 are arranged between the housing 4 and the stationary seal ring 10 to be separated from each other in the axial direction. The housing 4 is provided with a through-hole 4a that penetrates in the radial direction. An inner radial opening of the through-hole 4a communicates with a space 6 defined by the housing 4, the stationary seal ring 10, and two O-rings 5, and an outer radial opening of the through-hole 4a communicates with a static pressure gas supply source 9 disposed outside. Further, a cover 8 which is disposed on the side opposite to the rotary seal ring 20 in the stationary seal ring 10 is fixed to the housing 4.

An elastic member 7 is disposed between the cover 8 and the stationary seal ring 10. The stationary seal ring 10 is biased in the axial direction by the elastic member 7, and a sliding surface 11 of the stationary seal ring 10 and a sliding surface 21 of the rotary seal ring 20 are adapted to slide closely against each other.

Further, the stationary seal ring 10 has a plurality of passages 10a formed in the circumferential direction to extend from the outer peripheral surface to the sliding surface 11. In the passage 10a, one end side opening communicates with the space 6, and a supply hole 10b serving as the other end side opening communicates with an introduction groove 23 to be described later in the rotary seal ring 20. Furthermore, the sliding surface 11 of the stationary seal ring 10 is formed as a flat surface except for the supply hole 10b.

The stationary seal ring 10 and the rotary seal ring 20 are typically made of SiC (as an example of hard material) or a combination of SiC and carbon (as an example of soft material), but are not limited thereto, and any sliding material that is used as a sliding material for mechanical seals can be used. Furthermore, examples of SiC include sintered bodies using boron, aluminum, carbon, and the like as sintering aids, as well as materials consisting of two or more phases with different components and compositions, such as SiC with dispersed graphite particles, reaction sintered SiC consisting of SiC and Si, SiC-TiC, and SiC-TiN. Examples of carbon include a mixture of carbonaceous and graphite, resin-molded carbon, and sintered carbon. Further, in addition to the above-described sliding materials, metal materials, resin materials, surface-modifying materials (e.g., coating materials), composite materials, and the like can also be used.

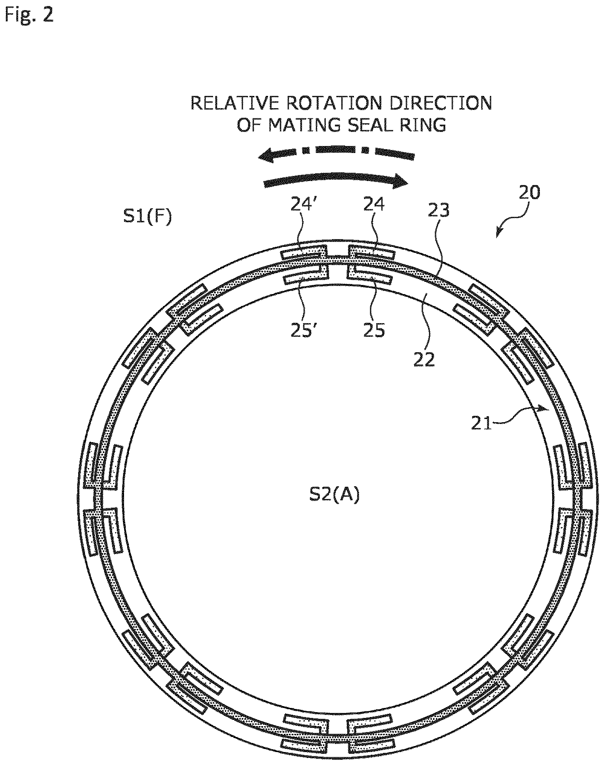

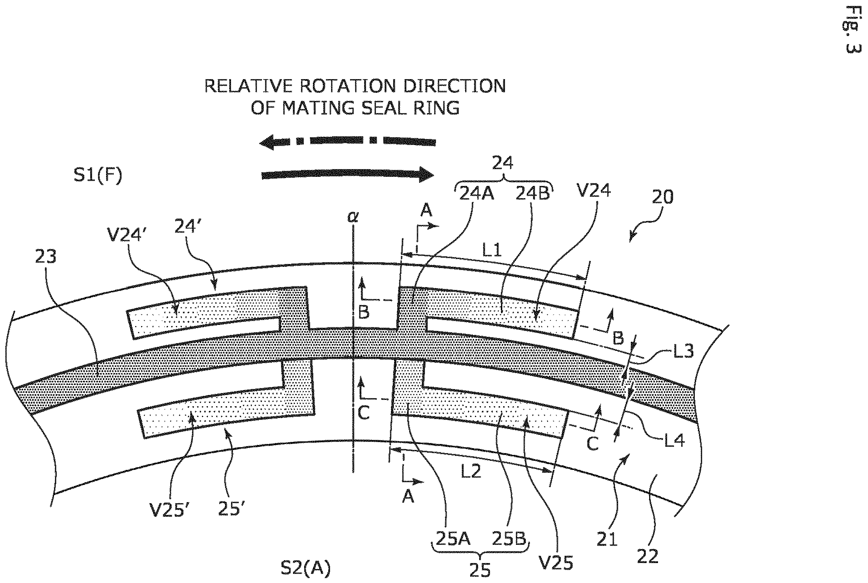

As shown in FIGS. 2 and 3, the rotary seal ring 20 is slidable clockwise and counterclockwise relative to the stationary seal ring 10 which is a mating seal ring. The solid and dashed arrows in FIGS. 2 and 3 indicate the relative rotation direction of the stationary seal ring 10 relative to the rotary seal ring 20. In the following description, the direction of the solid arrow in FIGS. 2 and 3 may be referred to as the normal rotation direction, and the direction of the dashed arrow may be referred to as the reverse rotation direction.

The sliding surface 21 of the rotary seal ring 20 is provided with the introduction groove 23, outer radial dynamic pressure generation mechanisms 24 and 24' serving as branch grooves extending toward the sealed fluid side, and inner radial dynamic pressure generation mechanisms 25 and 25' serving as branch grooves extending toward the leakage side. Furthermore, a land 22 is flat except for the introduction groove 23, the outer radial dynamic pressure generation mechanisms 24 and 24', and the inner radial dynamic pressure generation mechanisms 25 and 25'. Furthermore, the portion fitted to the sleeve 2 in the inner radial portion of the rotary seal ring 20 is not shown.

The introduction groove 23 is provided concentrically with the rotary seal ring 20. That is, the introduction groove 23 has an endless annular shape.

On the outer radial side of the introduction groove 23, a set of the outer radial dynamic pressure generation mechanisms 24 and 24' are evenly arranged in the circumferential direction (for example, eight sets in this embodiment).

The outer radial dynamic pressure generation mechanism 24 has a so-called Rayleigh step shape and includes a radial groove 24A and a circumferential groove 24B serving as a dynamic pressure generation portion. The radial groove 24A extends radially outward from the introduction groove 23. The circumferential groove 24B extends from the outer radial end of the radial groove 24A in the normal rotation direction substantially in parallel to the introduction groove 23.

Further, the outer radial dynamic pressure generation mechanism 24' is disposed to be separated from the outer radial dynamic pressure generation mechanism 24 in the reverse rotation direction. The outer radial dynamic pressure generation mechanism 24' has a symmetrical shape to the outer radial dynamic pressure generation mechanism 24 with respect to a line α extending in the radial direction.

On the inner radial side of the introduction groove 23, a set of the inner radial dynamic pressure generation mechanisms 25 and 25' are evenly arranged in the circumferential direction (for example, eight sets in this embodiment).

The inner radial dynamic pressure generation mechanism 25 has a so-called Rayleigh step shape and includes a radial groove 25A and a circumferential groove 25B serving as a dynamic pressure generation portion. The radial groove 25A extends radially inward from the introduction groove 23. The circumferential groove 25B extends from the inner radial end of the radial groove 25A in the normal rotation direction substantially in parallel to the introduction groove 23.

Further, the inner radial dynamic pressure generation mechanism 25' is disposed to be separated from the inner radial dynamic pressure generation mechanism 25 in the reverse rotation direction. The inner radial dynamic pressure generation mechanism 25' has a symmetrical shape to the inner radial dynamic pressure generation mechanism 25 with respect to a line α extending in the radial direction.

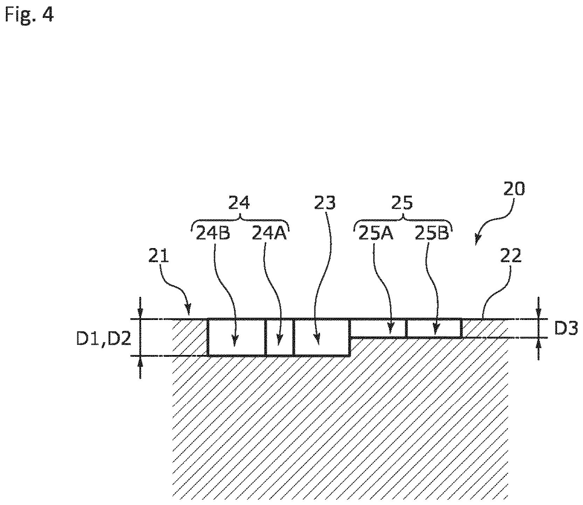

As shown in FIG. 4, a depth D1 of the introduction groove 23 is the same as a depth D2 of the radial groove 24A of the outer radial dynamic pressure generation mechanism 24 (D1=D2).

Further, a depth D2 of the radial groove 24A is deeper than a depth D3 of the radial groove 25A of the inner radial dynamic pressure generation mechanism 25 (D2>D3). Specifically, the depth D3 is about half the depth D2.

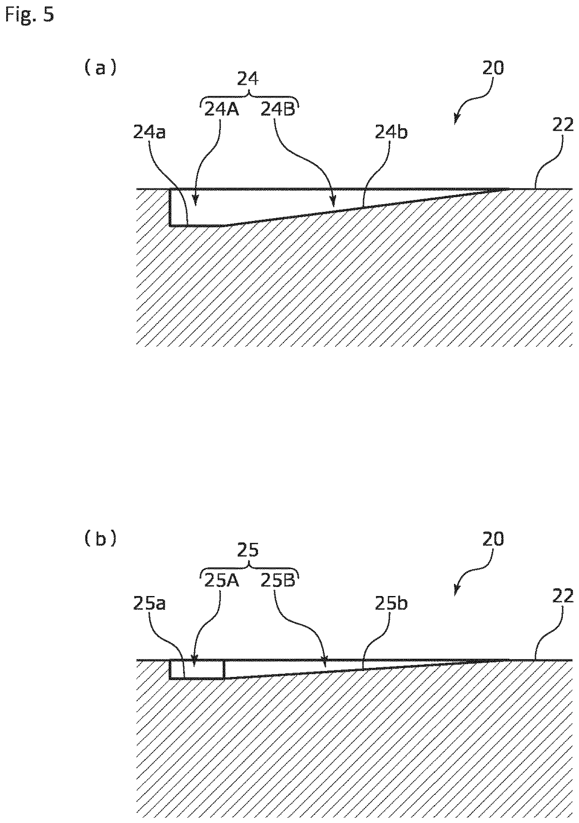

As shown in FIG. 5A, a bottom surface 24b of the circumferential groove 24B is an inclined surface that gradually becomes shallower from a bottom surface 24a of the radial groove 24A toward the land 22.

Further, as shown in FIG. 5B, a bottom surface 25b of the circumferential groove 25B is an inclined surface that gradually becomes shallower from a bottom surface 25a of the radial groove 25A toward the land 22.

Returning to FIG. 3, a circumferential length L1 of the circumferential groove 24B is almost the same as a circumferential length L2 of the circumferential groove 25B (L1=12).

That is, the groove volumes V25 and V25' of the inner radial dynamic pressure generation mechanisms 25 and 25' are smaller than the groove volumes V24 and V24' of the outer radial dynamic pressure generation mechanisms 24 and 24' (V24=V24'>V25=V25').

Further, a radial separation width L4 between the circumferential groove 25B and the introduction groove 23 is longer than a radial separation width L3 between the circumferential groove 24B and the introduction groove 23 (L3<L4).

Next, the pressure acting on the sliding surface 11 of the stationary seal ring 10 and the sliding surface 21 of the rotary seal ring 20 will be described.

When a static pressure gas G which is a barrier fluid is supplied from the static pressure gas supply source 9, the static pressure gas G is introduced into the introduction groove 23 of the rotary seal ring 20 through the through-hole 4a of the housing 4, the space 6, the passage 10a of the stationary seal ring 10, and the supply hole 10b (see FIG. 1). Furthermore, the static pressure gas G is at a higher pressure than the sealed fluid F.

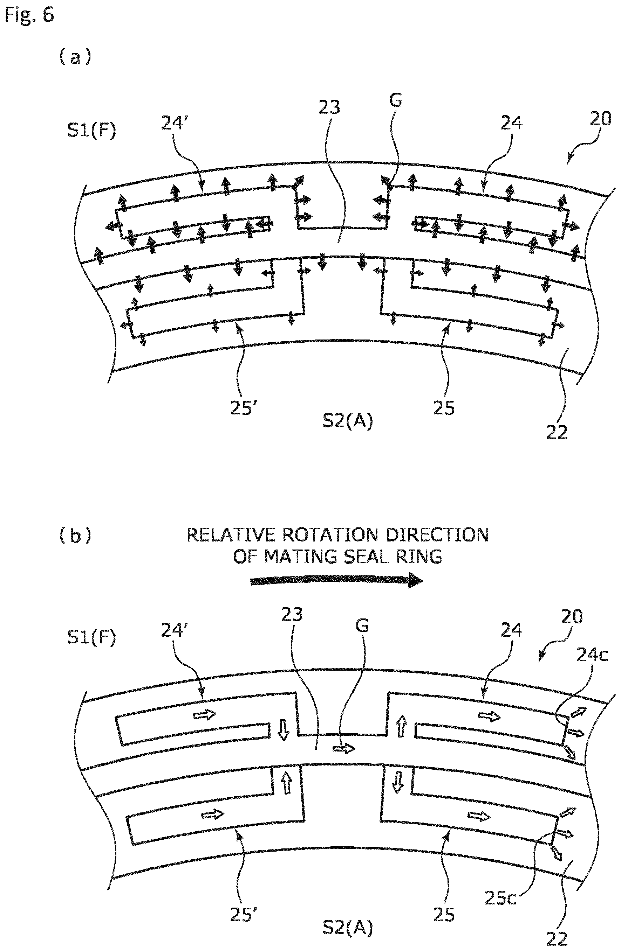

As shown in FIG. 6A, the static pressure gas G introduced into the introduction groove 23 flows into each of the outer radial dynamic pressure generation mechanisms 24 and 24' and each of the inner radial dynamic pressure generation mechanisms 25 and 25'. Accordingly, the static pressure of the static pressure gas G acts on the sliding surface 11 and the sliding surface 21, and the sliding surface 11 and the sliding surface 21 are separated from each other in the axial direction. In this way, since the static pressure of the static pressure gas G also acts on the portion of each of the outer radial dynamic pressure generation mechanisms 24 and 24' and the inner radial dynamic pressure generation mechanisms 25 and 25' branching off from the introduction groove 23 in the radial direction in addition to the portion of the introduction groove 23, the sliding surfaces 11 and 21 can be separated from each other in a well-balanced manner.

Further, as shown in FIG. 6B, when the sliding surfaces 11 and 21 rotate relative to each other in the normal rotation direction, the static pressure gas G inside the outer radial dynamic pressure generation mechanisms 24 and 24' and the inner radial dynamic pressure generation mechanisms 25 and 25' moves in the normal rotation direction. Accordingly, a dynamic pressure is generated in the vicinity of an end 24c of the circumferential groove 24B and an end 25c of the circumferential groove 25B. That is, since a dynamic pressure also acts on both the sliding surfaces 11 and 21 in addition to the static pressure of the static pressure gas G, the sliding surfaces 11 and 21 can be further separated from each other. Furthermore, although a slight relative negative pressure is generated in the outer radial dynamic pressure generation mechanism 24' and the inner radial dynamic pressure generation mechanism 25', the static pressure of the static pressure gas G acts predominantly.

As described above, since the groove volume of the outer radial dynamic pressure generation mechanisms 24 and 24' is larger than the groove volume of the inner radial dynamic pressure generation mechanisms 25 and 25', a sufficient amount of the static pressure gas G can be discharged between the sliding surfaces 11 and 21 from the outer radial dynamic pressure generation mechanisms 24 and 24', and the sealed fluid F flowing between the sliding surfaces 11 and 21 can be suppressed from moving radially inward.

On the other hand, since a small amount of static pressure gas G is supplied to the inner radial dynamic pressure generation mechanisms 25 and 25' compared to the outer radial dynamic pressure generation mechanisms 24 and 24', the static pressure gas G is less likely to leak into the inner space S2. Therefore, the sealed fluid F is less likely to leak into the inner space S2 together with the static pressure gas G.

Further, the groove volumes V25 and V25' of the inner radial dynamic pressure generation mechanisms 25 and 25' are smaller than the groove volumes V24 and V24' of the outer radial dynamic pressure generation mechanisms 24 and 24', and the opening area of the inner radial dynamic pressure generation mechanisms 25 and 25' is almost the same as the opening area of the outer radial dynamic pressure generation mechanisms 24 and 24'. The average depth of the inner radial dynamic pressure generation mechanisms 25 and 25' is shallower than the average depth of the outer radial dynamic pressure generation mechanisms 24 and 24'. Accordingly, since it is possible to ensure a wide opening area of the inner radial dynamic pressure generation mechanisms 25 and 25' with respect to the sliding surface 11, it is easy to separate the sliding surfaces 11 and 21 from each other in a well-balanced manner.

Further, since each of the outer radial dynamic pressure generation mechanisms 24 and 24' and the inner radial dynamic pressure generation mechanisms 25 and 25' communicates with the introduction groove 23, the static pressure gas G can be reliably taken from the introduction groove 23 into each of the outer radial dynamic pressure generation mechanisms 24 and 24' and the inner radial dynamic pressure generation mechanisms 25 and 25'.

Further, a separation width L4 between the circumferential groove 25B and the introduction groove 23 is longer than a separation width L3 between the circumferential groove 24B and the introduction groove 23 (L3<L4). In other words, since the inner radial dynamic pressure generation mechanisms 25 and 25' extend to a position farther from the introduction groove 23 in the radial direction than the outer radial dynamic pressure generation mechanisms 24 and 24', it is possible to generate a pressure in a wide range of the radial direction on the side of the inner space S2. Furthermore, although it is preferable that the separation width L4 is longer than the separation width L3 in that a pressure can be generated in a wide range of the radial direction on the leakage side, the present invention is not limited thereto, and the separation width L4 may be equal to or smaller than the separation width L3 (L3≥L4).

Further, since the introduction groove 23 has an annular shape, a pressure is generated in a well-balanced manner in the circumferential direction, and the sliding surfaces 11 and 21 can be stably separated from each other. Further, a dynamic pressure is less likely to be generated locally in the circumferential direction of the introduction groove 23 during relative rotation.

Further, a dynamic pressure can be generated by the outer radial dynamic pressure generation mechanism 24 and the inner radial dynamic pressure generation mechanism 25 during normal rotation, and a dynamic pressure can be generated by the outer radial dynamic pressure generation mechanism 24' and the inner radial dynamic pressure generation mechanism 25' during reverse rotation. That is, a dynamic pressure can be generated regardless of the rotation direction of the rotary seal ring 20.

Furthermore, in this embodiment, although the embodiment has been exemplified in which the depth D3 of the radial groove 25A is about half the depth D2 of the radial groove 24A, the embodiment can be freely modified as long as the depth D3 is shallower than the depth D2.

Further, in this embodiment, although the embodiment has been exemplified in which the depth D1 of the introduction groove 23 is the same as the depth D2 of the radial groove 24A, the embodiment can be freely modified.

Further, in this embodiment, although the embodiment has been exemplified in which the bottom surface 24b of the circumferential groove 24B and the bottom surface 25b of the circumferential groove 25B are inclined surfaces, the shape may be stepped so as to become shallower toward the tip. Further, the circumferential groove 24B and the circumferential groove 25B may each have a constant depth in the circumferential direction.

Further, in this embodiment, although the embodiment has been exemplified in which the outer radial dynamic pressure generation mechanisms 24 and 24' and the inner radial dynamic pressure generation mechanisms 25 and 25' include the radial grooves and the circumferential grooves, for example, the groove may be a spiral groove or the like having a circumferential component and a radial component.

### {Second embodiment}

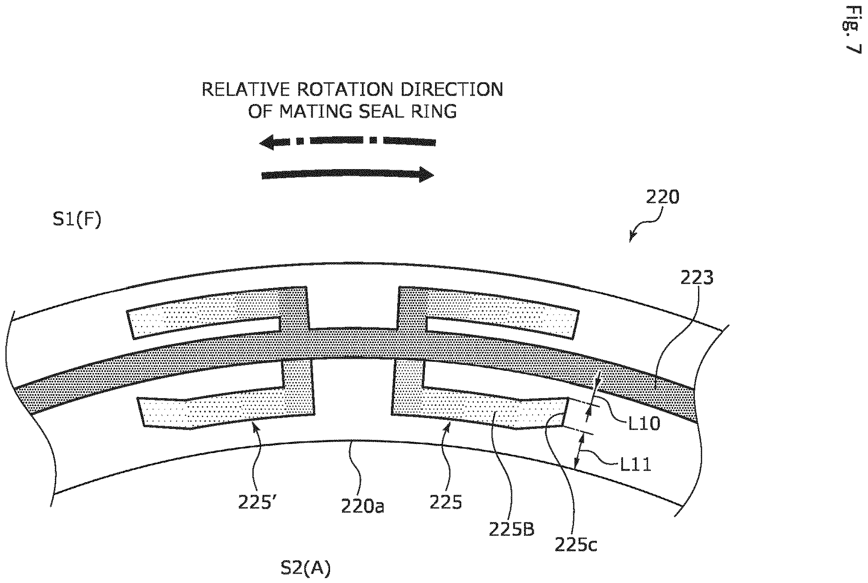

Next, a mechanical seal according to a second embodiment of the present invention will be described with reference to FIG. 7. Furthermore, the description of configurations that are the same as and overlap with the configurations of the first embodiment will be omitted.

As shown in FIG. 7, in a rotary seal ring 220 of this second embodiment, the shapes of the inner radial dynamic pressure generation mechanisms 225 and 225' are different from those of the inner radial dynamic pressure generation mechanisms 25 and 25' of the first embodiment, and the other configurations are the same as those of the first embodiment. Furthermore, since the inner radial dynamic pressure generation mechanisms 225 and 225' almost have the same configuration, only the inner radial dynamic pressure generation mechanism 225 will be described.

In the inner radial dynamic pressure generation mechanism 225, a tip of a circumferential groove 225B, that is, an end 225c extends toward the introduction groove 223.

Specifically, the tip portion of the circumferential groove 225B is bent to be inclined radially outward. A distance L10 between the end 225c of the circumferential groove 225B and the introduction groove 223 is shorter than a distance L11 between the end 225c of the circumferential groove 225B and an inner circumferential surface 220a of the rotary seal ring 220 (L10<L11). In other words, the end 225c of the circumferential groove 225B is disposed close to the introduction groove 223.

Accordingly, since the static pressure gas G inside the inner radial dynamic pressure generation mechanism 225 is guided to flow from the end 225c of the circumferential groove 225B toward the introduction groove 223 during relative rotation, the static pressure gas G is less likely to leak into the inner space S2. Therefore, the amount of the sealed fluid F leaking into the inner space S2 together with the static pressure gas G is reduced.

Furthermore, in this second embodiment, although the embodiment has been exemplified in which the tip portion of the circumferential groove 225B is bent to be inclined radially outward, the tip of the circumferential groove may extend radially outward in an arc shape. Further, the present invention is not limited to the embodiment in which the circumferential groove extends from the middle thereof toward the introduction groove so that the tip of the circumferential groove is brought close to the introduction groove, and the circumferential groove may extend from the leakage side end of the radial groove toward the introduction groove so that the tip of the circumferential groove is brought close to the introduction groove.

### {Third embodiment}

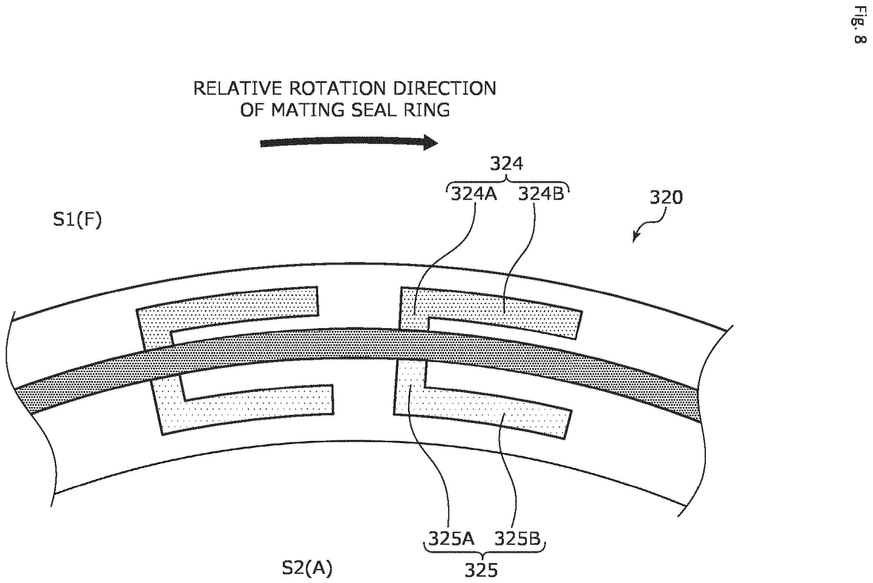

Next, a mechanical seal according to a third embodiment of the present invention will be described with reference to FIG. 8. Furthermore, the description of configurations that are the same as and overlap with the configurations of the first embodiment will be omitted.

As shown in FIG. 8, in a rotary seal ring 320 of this third embodiment, a plurality of outer radial dynamic pressure generation mechanisms 324 and inner radial dynamic pressure generation mechanisms 325 are provided in the circumferential direction, and the outer radial dynamic pressure generation mechanism 24' and the inner radial dynamic pressure generation mechanism 25' of the first embodiment are not provided.

The outer radial dynamic pressure generation mechanism 324 includes a radial groove 324A and a circumferential groove 324B. The radial groove 324A and the circumferential groove 324B have a constant depth.

The inner radial dynamic pressure generation mechanism 325 includes a radial groove 325A and a circumferential groove 325B. The radial groove 325A and the circumferential groove 325B have a constant depth. Furthermore, the depth of the inner radial dynamic pressure generation mechanism 325 is shallower than the depth of the outer radial dynamic pressure generation mechanism 324.

In this way, the mechanical seal of the present invention may correspond only to the normal rotation direction.

### {Fourth embodiment}

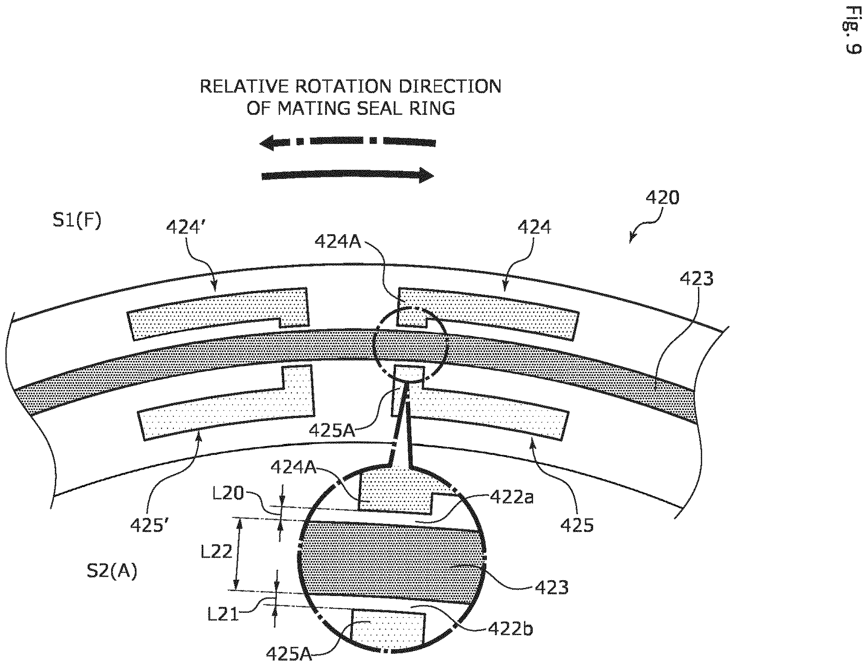

Next, a mechanical seal according to a fourth embodiment of the present invention will be described with reference to FIG. 9. Furthermore, the description of configurations that are the same as and overlap with the configurations of the first embodiment will be omitted.

As shown in FIG. 9, in a rotary seal ring 420 of this fourth embodiment, a radial groove 424A of an outer radial dynamic pressure generation mechanism 424 and a radial groove 425A of an inner radial dynamic pressure generation mechanism 425 do not communicate with the introduction groove 423. An outer radial dynamic pressure generation mechanism 424' and an inner radial dynamic pressure generation mechanism 425' also have substantially the same configuration.

Specifically, a radial width L20 of a land 422a that defines the radial groove 424A and the introduction groove 423 is shorter than a radial width L22 of the introduction groove 423 (L20<L22). Furthermore, the radial width L20 may be shorter than the radial width L22, and preferably, may be 1/5 or less.

Similarly, a radial width L21 of a land 422b that defines the radial groove 425A and the introduction groove 423 is shorter than the radial width L22 of the introduction groove 423 (L21<L22). Furthermore, the radial width L21 may be shorter than the radial width L22, and preferably, may be 1/5 or less.

Accordingly, the static pressure gas G passes over the lands 422a and 422b and is supplied from the introduction groove 423 to the outer radial dynamic pressure generation mechanism 424 and the inner radial dynamic pressure generation mechanism 425.

In this way, in the mechanical seal of the present invention, the branch groove extending from the introduction groove may be formed such that the static pressure gas is substantially movable between the introduction groove and the branch groove, and as in this embodiment, the branch groove may not communicate with the introduction groove.

### {Fifth embodiment}

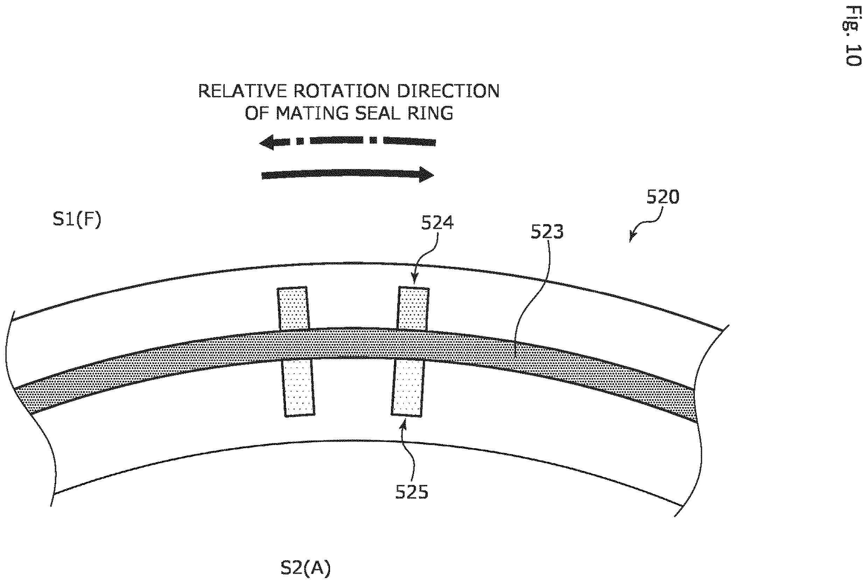

Next, a mechanical seal according to a fifth embodiment of the present invention will be described with reference to FIG. 10. Furthermore, the description of configurations that are the same as and overlap with the configurations of the first embodiment will be omitted.

As shown in FIG. 10, a rotary seal ring 520 of this fifth embodiment includes an introduction groove 523, a plurality of outer radial branch grooves 524 which extend radially outward from the introduction groove 523, and a plurality of inner radial branch grooves 525 which extend radially inward from the introduction groove 523. The inner radial branch groove 525 is shallower than the outer radial branch groove 524.

During relative rotation, a dynamic pressure is generated in the vicinity of the circumferential side surfaces of the outer radial branch groove 524 and the inner radial branch groove 525. In this way, the branch groove may not have a portion that extends in the circumferential direction.

Furthermore, in this fifth embodiment, although the embodiment has been exemplified in which a dynamic pressure is generated in the vicinity of the circumferential side surfaces of the outer radial branch groove 524 and the inner radial branch groove 525, these branch grooves may be formed deep enough to prevent a dynamic pressure from being generated during relative rotation.

### {Sixth embodiment}

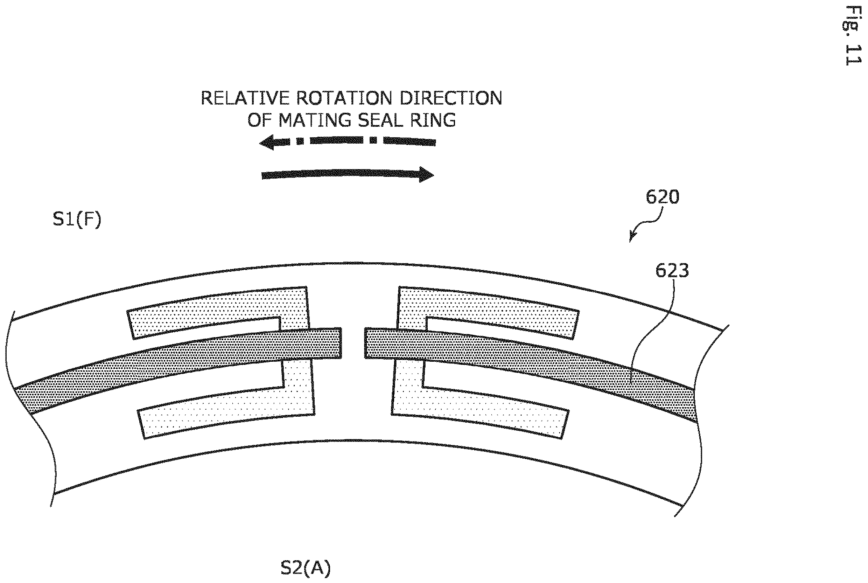

Next, a mechanical seal according to a sixth embodiment of the present invention will be described with reference to FIG. 11. Furthermore, the description of configurations that are the same as and overlap with the configurations of the first embodiment will be omitted.

As shown in FIG. 11, in a rotary seal ring 620 of this sixth embodiment, an introduction groove 623 is divided at one position in the circumferential direction. In this way, the introduction groove 623 is not limited to an annular groove, but may have a substantial C-shape.

Furthermore, the introduction groove is not limited to a C-shape, but may be divided into a plurality of grooves in the circumferential direction, or may have an annular wave shape or an annular angular shape.

### {Seventh embodiment}

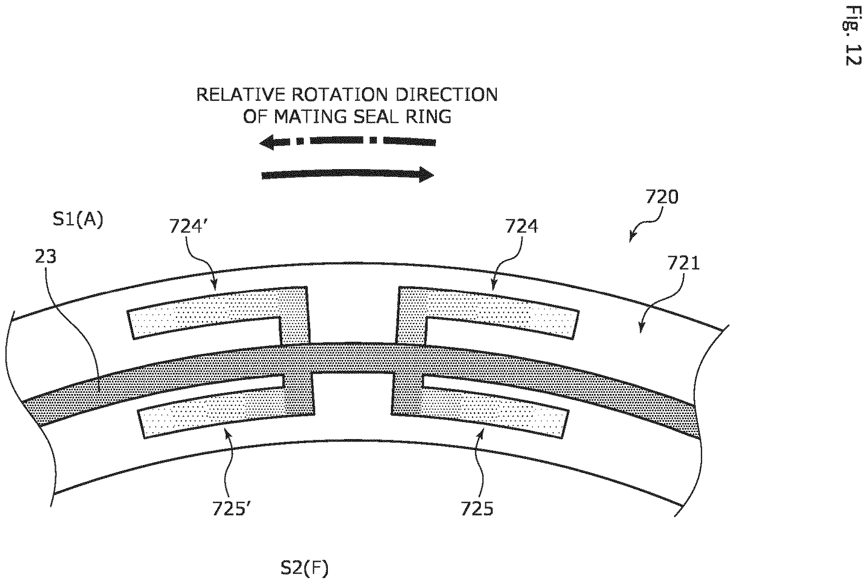

Next, a mechanical seal according to a seventh embodiment of the present invention will be described with reference to FIG. 12. Furthermore, the description of configurations that are the same as and overlap with the configurations of the first embodiment will be omitted.

A mechanical seal that adopts a rotary seal ring 720 of this seventh embodiment is of an outside type in which an atmosphere A communicates with an outer space S1 of a sliding surface 721 and a sealed fluid F is sealed on the side of an inner space S2.

In this seventh embodiment, the groove volume of the outer radial dynamic pressure generation mechanisms 724 and 724' is smaller than the groove volume of the inner radial dynamic pressure generation mechanisms 725 and 725'.

In this way, the mechanical seal of the present invention may be applied to an environment in which the sealed fluid space is located on the inner radial side of the sliding surface and the leakage space is located on the outer radial side of the sliding surface.

Although the embodiments of the present invention have been described above with reference to the drawings, the specific configuration is not limited to these embodiments, and the present invention also includes modifications and additions that do not deviate from the scope of the present invention.

For example, in the above-described first to seventh embodiments, the mechanical seal for industrial machinery has been described as an example, but the present invention may also be applied to other mechanical seals for automobiles and the like.

Further, in the above-described first to seventh embodiments, although it has been described that the sealed fluid is a high-pressure gas, the present invention is not limited thereto. The fluid may be liquid or low-pressure gas, or may be a mist of a mixture of liquid and gas.

Further, in the above-described first to seventh embodiments, although it has been described that the fluid on the leakage space side is atmosphere as a low-pressure gas, the present invention is not limited thereto. If the pressure is lower than that of the sealed fluid, the fluid may be liquid or high-pressure gas, or may be a mist of a mixture of liquid and gas.

Further, in the above-described first to seventh embodiments, although it has been described that the sealed fluid space side is the high pressure side and the leakage space side is the low pressure side, the sealed fluid space side and the leakage space side may have substantially the same pressure.

Further, in the above-described first to seventh embodiments, although the embodiment has been exemplified in which the barrier fluid is supplied between the sliding surfaces from the stationary seal ring side, the barrier fluid may be supplied between the sliding surfaces from the rotary seal ring side. Furthermore, the supply hole and the introduction groove may be formed in the same seal ring.

Further, in the above-described first to seventh embodiments, although the embodiment has been exemplified in which the rotary seal ring is provided with the introduction groove and the branch groove, the stationary seal ring may be provided with the introduction groove and the branch groove, the rotary seal ring may be provided with one of the introduction groove and the branch groove, and the stationary seal ring may be provided with the other of the introduction groove and the branch groove. Further, the branch groove having the dynamic pressure generation portion may have a spiral shape or the like other than the Rayleigh step shape.

### {REFERENCE SIGNS LIST}

- 9: Static pressure gas supply source
- 10: Stationary seal ring (other seal ring)
- 11: Sliding surface
- 20: Rotary seal ring (one seal ring)
- 21: Sliding surface
- 23: Introduction groove
- 24, 24': Outer radial dynamic pressure generation mechanism (branch groove extending toward leakage side)
- 25, 25': Inner radial dynamic pressure generation mechanism (branch groove extending toward sealed fluid side)
- A: Atmosphere
- F: Sealed fluid
- G: Static pressure gas (barrier fluid)
- S1: Outer space (sealed fluid side space)
- S2: Inner space (leakage side space)

## Claims

1. A mechanical seal disposed between a housing and a rotating shaft rotating relative to the housing, comprising a stationary seal ring fixed to a housing side and a rotary seal ring fixed to a rotating shaft side, and defining a sealed fluid space and a leakage space by relative rotation of the stationary seal ring and the rotary seal ring,
wherein at least one sliding surface of the stationary seal ring and the rotary seal ring is provided with a supply hole which supplies a barrier fluid between the sliding surfaces and at least one sliding surface of the stationary seal ring and the rotary seal ring is provided with an introduction groove which is formed to overlap with the supply hole in an axial view and extend in a circumferential direction,
wherein branch grooves each extends from the introduction groove to each of a sealed fluid side and a leakage side, and
wherein the branch groove extending toward the leakage side has a smaller groove volume than the branch groove extending toward the sealed fluid side.

2. The mechanical seal according to claim 1,
wherein the branch groove extending toward the leakage side has an average depth shallower than that of the branch groove extending toward the sealed fluid side.

3. The mechanical seal according to claim 1,
wherein a radial end of the branch groove extending toward the leakage side exists at a position farther from the introduction groove in a radial direction than a radial end of the branch groove extending toward the sealed fluid side.

4. The mechanical seal according to claim 1,
wherein the branch groove extending toward the leakage side and the branch groove extending toward the sealed fluid side communicate with the introduction groove.

5. The mechanical seal according to any one of claims 1 to 4,
wherein the introduction groove has an endless annular shape.

6. The mechanical seal according to claim 1,
wherein the branch groove has a dynamic pressure generation portion which extends in a relative rotation direction of the stationary seal ring and the rotary seal ring.

7. The mechanical seal according to claim 6,
wherein an end of the dynamic pressure generation portion in the branch groove extending toward the leakage side extends toward the introduction groove side.

8. The mechanical seal according to claim 7,
wherein a radial width between the leakage side and an end of the dynamic pressure generation portion in the branch groove extending toward the leakage side is larger than a radial width between an end of the dynamic pressure generation portion and the introduction groove.
